Europäisches Patentamt

European Patent Office

Office européen des brevets

(19)

(11) Numéro de publication: **0 115 357**
**B1**

(12) **FASCICULE DE BREVET EUROPÉEN**

(45) Date de publication du fascicule du brevet:
25.02.87

(51) Int. Cl.⁴: **B 65 G 37/02,** B 23 Q 7/14

(21) Numéro de dépôt: **84101750.2**

(22) Date de dépôt: **13.10.81**

(54) Installation pour l'assemblage et/ou l'usinage de pièces portées par des palettes circulantes et immobilisables.

(30) Priorité: 14.10.80 FR 8021976
09.04.81 FR 8107068
11.09.81 FR 8117272
09.10.81 FR 8119109

(43) Date de publication de la demande:
08.08.84 Bulletin 84/32

(45) Mention de la délivrance du brevet:
25.02.87 Bulletin 87/9

(84) Etats contractants désignés:
AT BE CH DE GB IT LI LU NL SE

(56) Documents cité:
DE-A-2 106 595
FR-A-2 284 379
FR-A-2 338 200
GB-A-1 349 930
GB-A-2 040 244

(73) Titulaire: **Prodel, Maurice, 153, rue de Verdun
Carlepont, F-60170 Ribecourt (FR)**
Titulaire: **Prodel, Jacques, 120 rue de Cuts
Carlepont, F-60170 Ribecourt (FR)**

(72) Inventeur: **Prodel, Maurice, 153, rue de Verdun
Carlepont, F-60170 Ribecourt (FR)**
Inventeur: **Prodel, Jacques, 120 rue de Cuts
Carlepont, F-60170 Ribecourt (FR)**

(74) Mandataire: **Netter, André, Cabinet NETTER 40,
rue Vignon, F-75009 Paris (FR)**

LIBER, STOCKHOLM 1987

## Description

L'invention a pour objet une installation pour l'assemblage et/ou l'usinage de pièces.

Dans la Demande de Brevet allemand 2 106 595 on décrit une installation dans laquelle des pièces portées par des palettes en circulation sont entraînées individuellement suivant des trajets rectilignes, parallèles et/ou perpendiculaires entre eux, l'installation comportant une multiplicité d'unités ou modules de même longueur alignés côte à côte longitudinalement formant une rangée, deux modules de la rangée pouvant être intervertis au point de vue de leur emplacement en vue d'adapter l'installation à un nouveau travail.

Le préambule de la revendication 1 est basé sur cet état de la technique.

Dans cette installation connue lorsqu'une palette est immobilisée pour le travail de la pièce qu'elle porte, elle entrave toute circulation des palettes qui la suivent en amont, de sorte que le rythme de travail de l'installation dans son ensemble est celui du travail le plus long en un module quelconque.

En outre, chaque module comprenant des voies de circulation longitudinales dans un sens et dans l'autre raccordées par des voies transversales, il comprend une multiplicité de carrefours de sorte que si on désire automatiser l'installation, il faudrait prévoir à chaque carrefour des moyens de commande automatique pour diriger convenablement chaque palette parvenant audit carrefour, ce qui, compte tenu du nombre de carrefours aboutirait à un prix prohibitif pour chaque module, sans aucun avantage particulier.

L'objet de la présente invention est une installation selon le préambule de la revendication 1 dans laquelle les inconvenients cités ci-dessus sont éliminés.

L'installation transformable selon l'invention, destinée à assumer une multiplicité de types de fabrication par assemblage et/ou usinage de pièces portées par des palettes en circulation entraînées individuellement suivant des trajets rectilignes, parallèles et/ou perpendiculaires entre eux, qui comporte une multiplicité d'unités ou modules de même longueur alignés côte à côte longitudinalement, est caractérisée en ce que chaque module comprend une voie principale de circulation rectiligne longitudinale ayant comme longueur la longueur commune aux modules, et éventuellement une ou des voies dérivées parallèles et/ou perpendiculaires où s'effectuent l'assemblage et/ou l'usinage, en ce que les modules sont disposés suivant deux rangées parallèles de part et d'autre d'un plan longitudinal, et forment un ou plusieurs couples de modules, les modules d'un couple étant disposés en regard l'un de l'autre de part et d'autre dudit plan longitudinal et tous les modules étant interchangeables entre eux dans une même rangée et/ou d'une rangée dans l'autre, et en ce que les deux voies parallèles principales de circulation en sens opposés correspondant respectivement aux deux rangées sont reliées entre elles à chaque extrémité par un module de raccordement à voie transversale.

Du fait que l'assemblage et/ou l'usinage d'une pièce se fait en dehors d'une voie principale de circulation permet de prévoir, pour chaque module, une alimentation en fonction du rythme de travail optimal dudit module sans qu'elle soit entravée ou ralentie par un rythme de travail plus lent de modules placés en amont.

La disposition des modules suivant deux rangées parallèles, la possibilité d'interchanger un module d'une rangée non seulement avec un autre module de ladite rangée mais aussi avec un module de l'autre rangée, accroît la capacité de transformation de l'installation.

Chaque module est d'une construction plus simple et plus économique.

L'enlèvement et la mise en place d'un module sont plus faciles.

La division des modules en deux rangées longitudinales et le fait que chaque module en ce qui concerne la circulation longitudinale des palettes est affecté à un sens déterminé, à l'exclusion du sens opposé, réduisent considérablement le nombre de carrefours. L'automatisation de l'installation, qui comprend l'équipement de chaque carrefour par un dispositif de commande automatique pour le bon aiguillage d'une palette parvenant audit carrefour, n'entraîne qu'un investissement minimal pour l'obtention de cette automatisation.

Les voies de circulation affectées aux palettes sont courtes, ce qui permet de réduire le nombre de palettes présentes dans l'installation tout en assurant un rythme de travail optimal pour chacun des modules.

La description qui suit, faite à titre d'exemple, se réfère aux dessins annexés dans lesquels.

- la figure 1 est une vue en élévation d'une installation selon l'invention, pour une forme de réalisation;

- la figure 2 est une vue en coupe selon la ligne II-II de la figure 1;

- la figure 3 est une vue en coupe verticale suivant la ligne III-III de la figure 1, mais à plus grande échelle;

- la figure 4 est une vue perspective partielle d'une partie de l'ossature, certains des éléments ayant été éloignés les uns des autres pour une meilleure compréhension;

- la figure 5 est une vue en coupe par un plan vertical longitudinal de la partie supérieure d'un pied au droit de l'assemblage avec une traverse;

- la figure 6 est une vue en coupe verticale longitudinale montrant l'assemblage d'un pied, d'une traverse et de longerons;

- la figure 7 est une vue en plan correspondant à la figure 1;

- la figure 8 est une vue en coupe verticale longitudinale montrant l'assemblage de deux modules adjacents avec une traverse;

- la figure 9 est une vue en coupe verticale transversale au droit d'un module de retour rapide des palettes;

- la figure 10 est une vue en coupe horizontale d'une partie d'un module de retour angulaire;
- la figure 11 est une vue en coupe suivant la ligne XI-XI de la figure 10;
- la figure 12 est une vue en coupe suivant la ligne XII-XII de la figure 10;
- la figure 13 est une vue en coupe suivant la ligne XIII-XIII de la figure 10;
- la figure 14 est une vue schématique en plan d'un module d'assemblage manuel;
- la figure 15 est une vue schématique en plan d'un module d'assemblage et/ou d'usinage automatique.

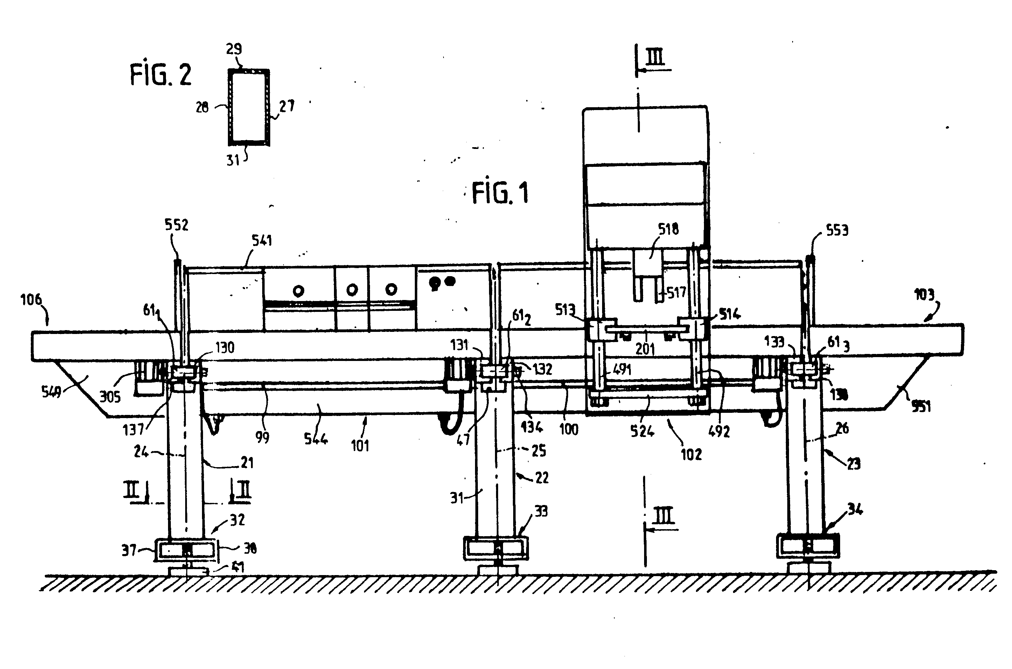

L'atelier flexible comprend, dans la forme de réalisation représentée, une ossature constituée par trois pieds 21, 22, 23, (figure 1) dont les lignes moyennes verticales 24, 25, 26, sont coplanaires. Chaque pied est tubulaire et a, en section transversale, une configuration rectangulaire, présentant ainsi une face antérieure 27, une face postérieure 28 et deux faces latérales 29, 31 (figure 2). Chaque pied est avantageusement obtenu par pliage d'une tôle initialement plane.

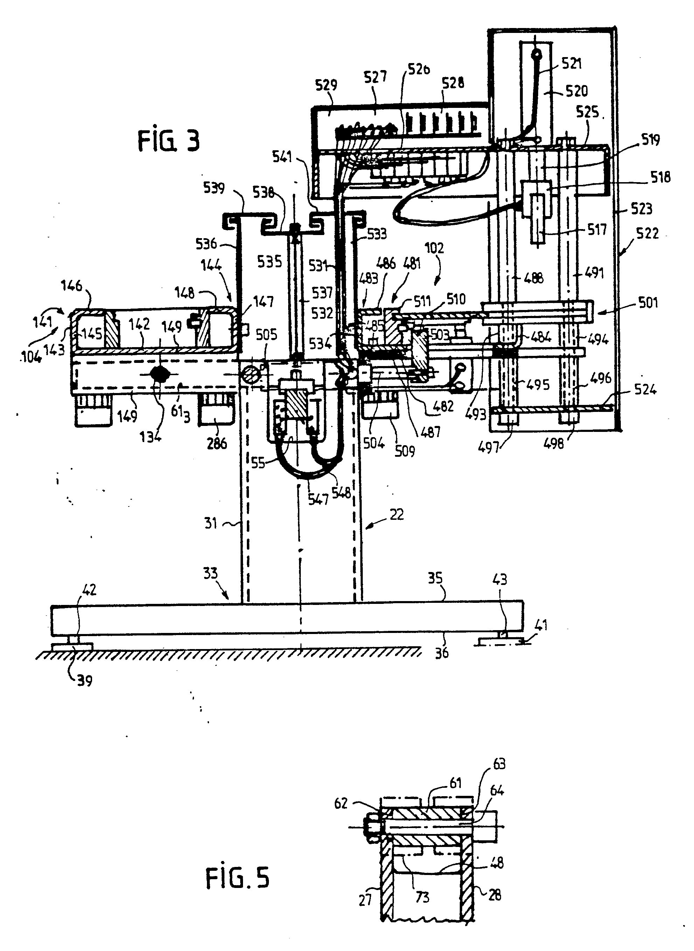

Chaque pied est érigé sur une embase, respectivement 32, 33, 34, tubulaire, à section transversale rectangulaire, présentant chacune une face supérieure 35 (figure 3), une face inférieure 36 et des faces latérales 37 et 38. L'appui sur le sol se fait, pour chaque embase, par l'intermédiaire de deux disques ou tampons d'extrémité 39, 41, solidaires de tiges filetées, respectivement 42, 43, coopérant avec un taraudage, pour le réglage de l'horizontalité.

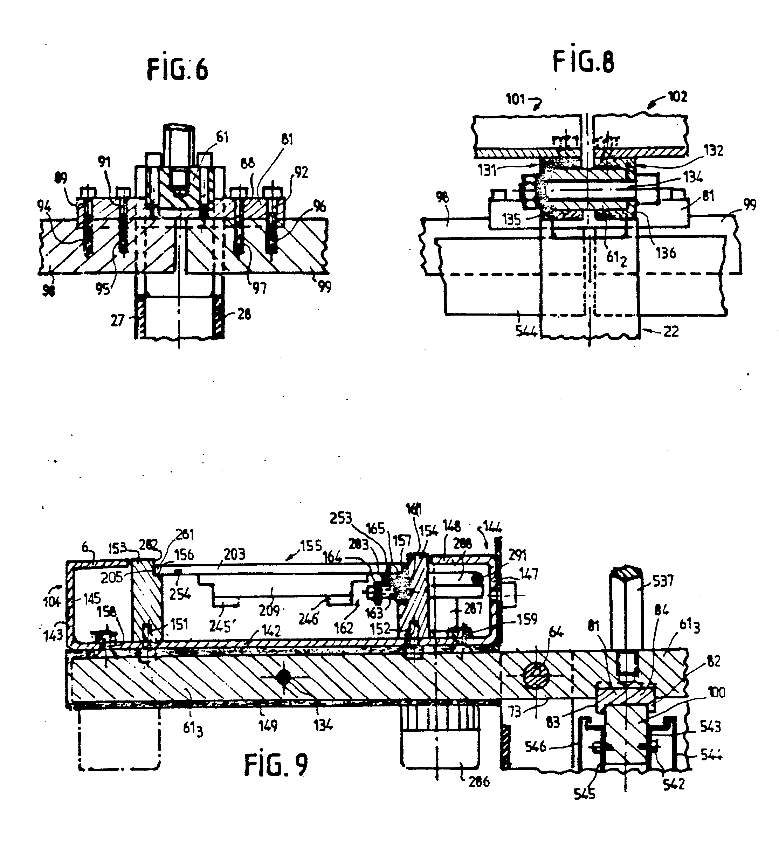

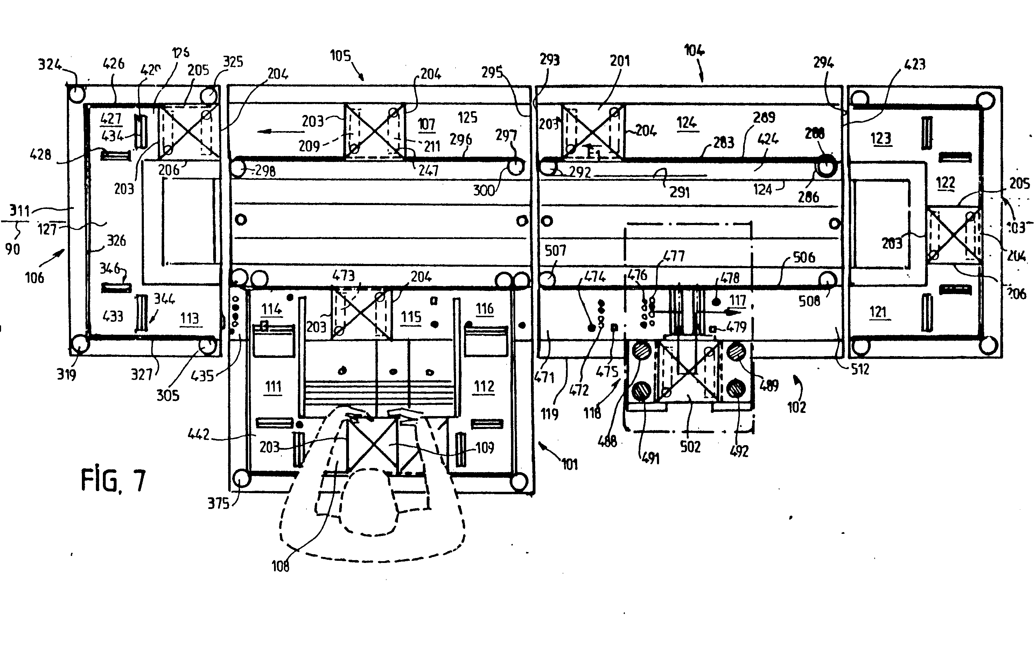

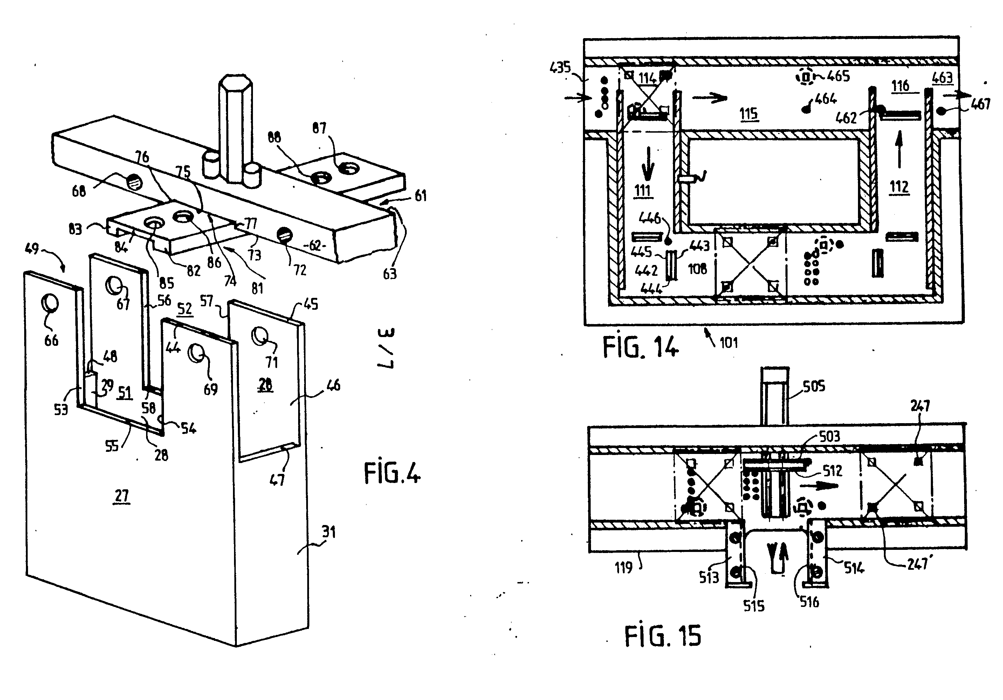

La paroi antérieure 31 d'un pied ne se prolonge pas jusqu'aux bords supérieurs transversaux 44, 45 (figure 4), ménageant ainsi une entrée 46 limitée par un bord inférieur 47. De même, la paroi postérieure 29 du pied ne se prolonge pas jusqu'aux bords 44 et 45 mais seulement jusqu'à un bord intermédiaire 48, ménageant ainsi une autre entrée 49. Les parois latérales 27 et 28 d'un pied présentent deux larges échancrures 51, 52, limitées par des bords respectivement 53, 54, 55 et 56, 57, 58, les bords 53 et 56 étant coplanaires, ainsi que les bords 54 et 57 et les bords 55 et 58, respectivement.

Dans l'intervalle entre les parois latérales 27 et 28, à la partie supérieure de celles-ci, est logée une traverse 61 à section transversale rectangulaire, les faces opposées 62 et 63 (figure 4) de ladite traverse étant en regard respectivement des faces internes des parois latérales 27 et 28. La solidarisation est obtenue par des boulons 64, 65, le boulon 64 (figure 5) traversant des trous 66 et 67 des parois 27 et 28 ainsi qu'un trou 68 de la traverse 61, le boulon 65 traversant les trous 69 et 71 des parois 27 et 28 ainsi qu'un trou 72 de la traverse 61.

La face inférieure 73 de la traverse 61 présente une encoche 74 à face supérieure 75 et faces verticales 76 et 77. Dans ladite encoche est logée la partie supérieure d'un court chapeau longitudinal 81 à section transversale en forme d'U, présentant une branche antérieure 82, une branche postérieure 83 ainsi qu'un corps horizontal 84, ce dernier étant percé vers chacune de ses extrémités par des trous, respectivement 85, 86 et 87, 88.

Ces trous servent au passage de boulons, respectivement 89, 91 et 92, 93 (figure 6), qui servent à la fixation, par des trous taraudés 94, 95 et 96, 97 qu'ils présentent, de longerons respectivement 98, 99, dans le prolongement l'un de l'autre.

L'ossature de l'atelier flexible comprend ainsi des pieds, au droit de chaque pied des traverses dirigées vers l'avant et vers l'arrière à partir du plan longitudinal moyen 90, ainsi que des longerons d'entretoisement.

Les traverses servent au montage amovible d'ensembles ou modules qui, dans la forme de réalisation représentée, sont au nombre de six, à savoir un module 101 (fig. 7) d'assemblage manuel, un module 102 d'assemblage ou d'usinage automatique, un premier module de retour angulaire 103, un premier module de retour rectiligne rapide 104, un second module de retour rectiligne rapide 105, et un second module de retour angulaire 106.

Le module 101 ménage, pour des palettes porte-pièce, une voie antérieure 108 dans laquelle la ou les pièces portée(s) par une palette, comme montré en 109 peut(vent) être assemblée(s) ou autrement traitée(s) manuellement (l'opérateur, ou l'opératrice, est montré en trait pointillé). La voie 108 est alimentée en palettes à partir d'une voie 111, qui lui est perpendiculaire, que ménage le module 101 et les palettes, telles que 109, se trouvant sur la voie 108 peuvent être évacuées par une voie 112 dudit module, perpendiculaire à la voie 108.

Une palette parvient à la voie 111 du module 101 à partir d'une voie 113, perpendiculaire à la voie 111, que ménage le module 106. L'extrémité amont de la voie 111 constitue un carrefour 114, qui est dans le prolongement de la voie 113.

Le module 101 ménage également une voie postérieure 115 dans l'alignement de la voie 113 et dont l'extrémité aval forme, avec l'extrémité aval de la voie 112, un carrefour 116.

Le module 102, adjacent au module 101, ménage une voie 117 dans l'alignement des voies 113 et 115, qui règne sur toute la longueur du module 102, et à mi-longueur de ladite voie ledit module présente un poste d'assemblage ou d'usinage automatique, 118, en saillie vers l'avant par rapport à la face frontale 119 dudit module.

Le module 103 présente une voie 121, prolongeant la voie 117 et en alignement avec celle-ci, et qui se poursuit par une voie perpendiculaire 122, celle-ci se poursuivant par une voie 123 perpendiculaire à la voie 122 et ainsi parallèle à la voie 121.

Le premier module de retour rapide 104 présente une voie 124 prolongeant la voie 123 et en alignement avec celle-ci, et ainsi parallèle aux voies 113, 115 et 117.

Le second module de retour rapide 105 ménage une voie 125 prolongeant la voie 124 et en alignement avec celle-ci, et la voie 125 se prolonge par une voie 126, en alignement avec elle, du second module 106 de retour angulaire, lequel présente également une voie 127 perpendiculaire à la voie 126, la voie 127 se poursuivant par la voie 113 qui lui est perpendiculaire.

Chacun des modules est une unité mécanique qui se monte à la manière d'un tiroir sur l'ossature. Le module 101 est monté par des glissières constituées par des fers en U, 130 et 131, (fig. 1 et 8) qui en forment les extrémités latérales à sa partie inférieure, respectivement sur les traverses $61_1$ et $61_2$ solidaires des pieds 21 et 22. Le module 102 est monté par des glissières à section transversale constituées par des fers en U, 132 et 133 (fig. 8), sur les traverses $61_2$ et $61_3$ (fig. 1). Sur la traverse $61_2$, par exemple, est ainsi monté, sur sa partie de gauche, le module 101, tandis que sa partie de droite sert au montage du module 102. La solidarisation de l'un et l'autre des modules avec une traverse 61 est obtenue par des boulons 134, qui traversent tant la traverse 61 que les corps 135 et 136 des fers en U 131 et 132 (figures 3 et 8).

Le montage et la fixation des autres modules se font d'une manière analogue.

On a montré en 137 (fig. 1) un fer en U faisant partie du module 106 et en 136 un fer en U faisant partie du module 103.

Les modules sont prévus pour réaliser la circulation de palettes ou porte-pièces, pour assurer leur immobilisation en des positions prédéterminées, en vue de permettre le traitement, manuel ou automatique, des pièces qu'elles portent. La circulation des palettes est contrôlée de manière manuelle ou automatique en fonction du traitement à appliquer aux pièces, de l'alimentation en pièces, de l'évacuation des pièces, suivant des modalités présélectionnables et dans des conditions de sécurité optimales tant à l'égard du personnel que des pièces.

Chacun des modules comprend des moyens pour le guidage des palettes, leur mise en circulation à l'aide d'un seul moteur électrique, des moyens pour l'accueil des palettes à partir d'un module précédent et des moyens pour le transfert des palettes au module suivant.

Le module 104 ou premier module de retour rapide présente (figures 3 et 9) un corps de module 141 avec un plancher 142, un rebord postérieur ou externe 143 et un rebord interne 144, le rebord 143 présentant une paroi verticale 145 et un retour 146, tandis que le rebord 144 présente une paroi verticale 147 et un retour horizontal 148. C'est sous le plancher 142 qu'est fixé le fer en U 149 pour le montage sur la partie postérieure de la traverse $61_3$.

Sur le fond ou plancher 142 du module 104 sont fixés par des vis 151 et 152 des rails, respectivement 153 et 154 (fig. 9) destinés à guider les palettes comme celle montée en 155. Le rail 153 présente à cet effet un épaulement 156 et le rail 154 un épaulement 157 à un niveau légèrement inférieur à celui de l'épaulement 156.

Les vis 158, 159 servent à la fixation du fer en U 149 au plancher 142 du module 104. Le rail 154 présente une encoche 161 pour le maintien d'une chaîne Galle 162 dont chaque maillon présente deux rouleaux 163 encadrés par des joues 164 et 165.

Par sa partie marginale 281 (fig. 9), la palette 155 repose sur l'épaulement 156 et est en contact par sa face latérale 205 avec la face 282 du rail 153. Sur son bord opposé, la palette 155 repose par le filet 253 contre une courroie 283 à section transversale circulaire reposant elle-même sur les rouleaux 163 de la chaîne Galle 162. La courroie 283 est entraînée à partir d'un moteur électrique 286 qui équipe le module 104 et qui, par son arbre 287, entraîne une poulie 288 (fig. 7) sur laquelle passe la courroie 283 qui forme ainsi deux brins, à savoir un brin opératoire 289 adjacent au rail 154 et un brin de retour 291 qui n'a pas besoin de coopérer avec une chaîne Galle, ladite courroie passant sur une poulie 292 à l'extrémité 293 du module 104 opposée à l'extrémité 294 portant le moteur électrique 286. La résistance au déplacement de la courroie est relativement très faible en raison de sa coopération avec les rouleaux 163.

Le module 105, ou second module de retour rapide, est constitué de façon identique au module 104. Le transfert d'une palette du module 104 au module 105 se fait sans aucune difficulté, la palette sortant du module 104 étant entraînée à son entrée dans le module 105, à l'extrémité 295 de celui-ci, grâce à une courroie 296 qui équipe ce dernier, entraînée à partir d'un moteur électrique 300 qui équipe celui-ci et qui est guidée par deux poulies 297, 298.

A la sortie de la voie 125 du module 105, la palette pénètre dans la voie 126 du module 106. Ce dernier comporte des moyens pour entraîner la palette suivant un mouvement perpendiculaire dans la voie 127, puis dans la voie 113, dans un mouvement perpendiculaire à celui qu'elle a dans la voie 127.

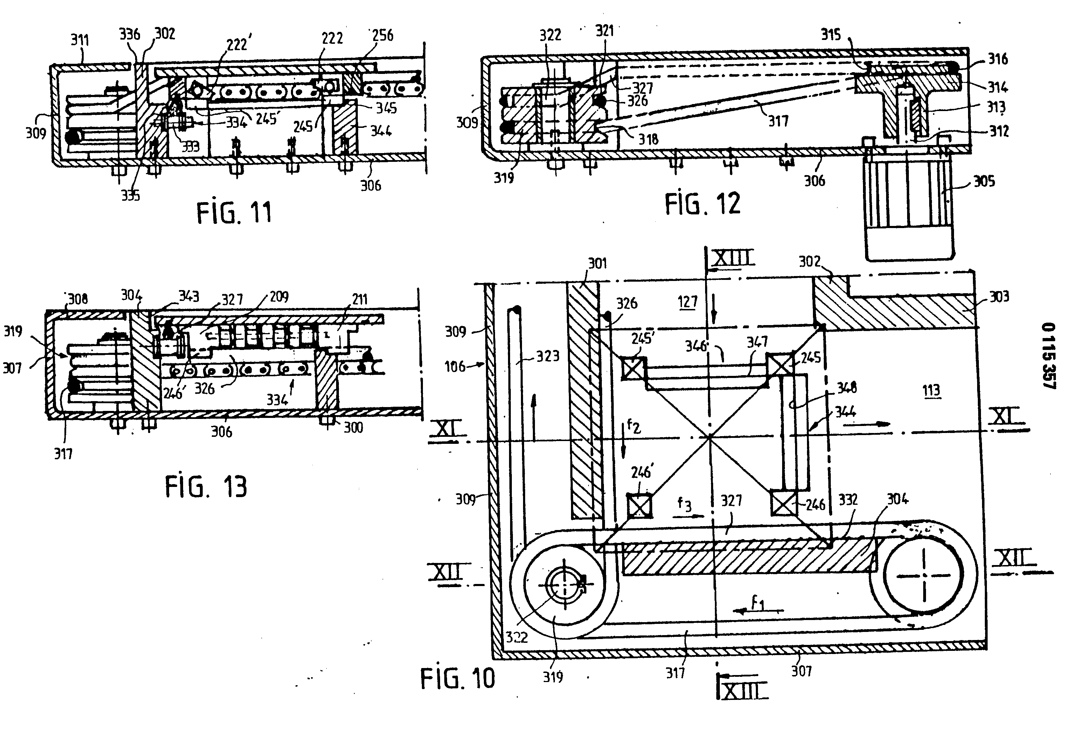

Sur la figure 10, on a montré la partie du module 106 au raccordement des voies 127 et 113. La voie 127 est limitée par deux rails transversaux 301 et 302 et la voie 113 par deux rails longitudinaux 303 et 304. Un moteur électrique 305 (figure 12) fait partie du module 106; il est placé sous la paroi inférieure ou plancher 306 dudit module, à la sortie de la voie 113. Ledit module est en outre limité par une paroi antérieure 307 (fig. 13) se prolongeant par un rebord horizontal 308, une paroi latérale 309 verticale se prolongeant par un rebord horizontal 311 (fig. 11).

Sur l'arbre 312 du moteur électrique 305 (fig. 12) est calée, par son noyau 313, une poulie 314. Cette poulie présente une gorge 315 à sa partie supérieure et dans cette gorge passe une courroie 316, à section transversale circulaire. Le brin 317 qui quitte la poulie 314 circule dans le sens de la flèche $f_1$ (figure 10) et parvient à la gorge inférieure 318 d'une poulie 319 à deux gorges. La gorge 318 est à un niveau inférieur à celui de la gorge 315 de la poulie motrice 314. La gorge 318, proche du fond ou plancher 306, détermine ainsi un niveau inférieur; la seconde gorge, 321, de ladite poulie définit un niveau intermédiaire et la gorge 315 définit un niveau supérieur. La poulie 319 est montée à rotation libre autour d'un axe 322.

Le brin 317, après être passé sur la poulie 319 dans la gorge 318, se poursuit par un brin 323 adjacent à la paroi verticale 309 et qui est au niveau inférieur. Après être passée sur une poulie 324 (figure 7), prévue au raccordement entre la voie 126 et la voie 127, puis sur une poulie 325 prévue à l'entrée de la voie 126, après avoir été guidée à nouveau sur la poulie 324, mais sur la gorge de celle-ci située à un niveau intermédiaire, la courroie 316 revient suivant un brin 326 qui, après engagement dans la gorge 321 de niveau intermédiaire de la poulie 319, se poursuit par un brin 327, d'abord ascendant, puis horizontal, lequel passe dans la gorge 315 de la poulie 314 de niveau supérieur.

Le module 101 d'assemblage manuel est suivi par le module 102 d'assemblage et/ou d'usinage automatique, qu'on va maintenant décrire.

Le module 102 comprend un corps 481 (figure 3) constitué par un plancher 482, un bord postérieur 483 et un bord antérieur 484, le bord postérieur ayant une paroi verticale 485 et un retour 486. Du plancher 482 est solidaire une platine 487 qui sert au support de quatre colonnes 488, 489, 491, 492 (fig. 7). Les parties inférieures des colonnes, de plus faible diamètre, sont entourées par des entretoises tubulaires, comme montré en 493, 494 et 495, 496. Le montage se fait à l'aide de vis et écrous comme montré en 497, 498. Les colonnes traversent un guichet 501 (fig. 3) dans lequel peut être engagée une palette porte-pièce comme montré en 502, et cela sous l'action d'un poussoir 503 à gouttière 510 porté par l'organe mobile 504 d'un vérin 505 et coopérant avec les plots 245, 245'. L'entraînement des palettes dans le module 102 se fait par une courroie 506 passant sur des poulies 507, 508. Le guidage des palettes dans la voie 117 fait appel à un rail 511.

Le guichet 501 comprend des barres transversales 513 et 514 en saillie par rapport à la face frontale 119 et qui ménagent des rainures 515 et 516 pour le guidage et le soutien de la palette. L'outil 517 du poste de travail dépend d'un porteoutil 518 porté par l'organe mobile 519 d'un vérin 520. Un dispositif automatique 521 permet le réglage de la course de l'outil. Le cas échéant, une enclume peut être prévue contre laquelle prend appui la face inférieure, dans sa partie centrale laissée libre, du plateau faisant partie de la palette.

Le poste 118 comprend un boîtier 522 à paroi verticale antérieure 523, un plateau inférieur 524 relié aux colonnes, ainsi qu'un plateau 525, lequel se prolonge vers l'arrière en 526 pour limiter un compartiment 527 comportant des organes pneumatiques 528 et électriques 529. Les conducteurs ou conduits se rassemblent suivant des faisceaux 531 qui sont contenus dans une gaine longitudinale 532 limitée vers l'avant par un écran 533 fixé sur le bord postérieur 483 par des vis 534. Une autre gaine longitudinale 535 est prévue vers l'arrière et limitée par un écran postérieur 536 fixé sur le bord antérieur 144 du module 104. Ces gaines servent au passage de conduits pneumatiques et de conducteurs électriques.

D'une traverse, comme $61_3$, dépend, par vissage, une colonnette 537 qui permet, par une plaque 538 à rebord qu'elle soutient, le montage de couvercles 539, 541.

Sur un longeron, comme le longeron 100, sont fixés, par des vis 542, des corps de boîtiers 543 à couvercle 544 sur la face avant et 545, 546 sur la face arrière. De ces boîtiers sont issus des faisceaux de conduits ou conducteurs 547, 548. Des voiles longitudinaux 549, 551 sont prévus pour contribuer à la rigidité des modules 106 et 103. Des écrans 552, 553 obturent les gaines longitudinales à leurs extrémités.

On va maintenant décrire la circulation d'une palette portepièce dans l'installation, tant à l'intérieur d'un module que pour le passage d'un module à un module voisin, en précisant les moyens prévus pour commander et contrôler automatiquement les divers circuits que peut suivre une palette, pour tenir compte notamment de l'encombrement plus ou moins grand d'un poste de travail.

Dans la voie 124 du premier module de retour rapide 104 (fig. 7), une palette, comme montré en 201, circule dans le sens de la flèche $f_1$ ou direction longitudinale sous l'action d'entraînement de la courroie 283, entraînée par le moteur électrique 286, sur l'arbre duquel est calée la poulie 288 qui, en coopération avec la poulie 292, définit le circuit fermé de la courroie 283. Le moteur électrique 286 est placé à proximité de l'entrée 423 du module 104 sur le bord antérieur 144 de celui-ci.

A la sortie 293 de la voie 124, la palette pénètre dans la voie 125 du module 105 par l'entrée 295 de celle-ci, adjacente à la sortie 293, et elle est entraînée dans la voie 125 par la courroie 296 disposée en alignement avec la courroie 283.

Le circuit fermé de la courroie 296 est imposé par les poulies 297 et 298. La poulie 297 est calée sur l'arbre d'un moteur électrique 425 disposé à proximité de l'entrée 295 de la voie 125.

Dans la voie 124, la palette est guidée par le rail 153 (figure 9) et dans la voie 125 elle est guidée par un rail qui prolonge le rail 153. L'entraînement de la palette se fait sans discontinuité, les vitesses des courroies 283 et 296, qui s'exercent simultanément sur la palette au passage de cette dernière de la voie 124 à la voie 125, étant égales.

Dans la voie 126 (figure 7) du module 106 prolongeant la voie 125, la palette est entraînée par le brin 426 de la courroie et, quand elle parvient au carrefour 427 entre la voie 126 et la voie 127, elle est soutenue par coopération de ses plots inférieurs 246, 246' avec un petit bloc 428 prolongeant le rail interne de la voie 126, pour la circulation dans le prolongement de ladite voie. Dans la voie 127, la palette est entraînée dans la direction transversale par le brin 326. Au début de sa circulation dans la voie 127, au soutien de la palette contribue un petit bloc 429, à faces verticales de guidage 434, et qui coopère avec les plots 246 et 247 de la palette. La palette parvient ensuite au carrefour 433 entre la voie 127 et la voie 113 où son changement de direction de sens de circulation s'effectue comme il a été expliqué en détail en référence aux figures 10 à 13.

## Revendications

1. Installation transformable destinée à assumer une multiplicité de types de fabrication par assemblage et/ou usinage de pièces portées par des palettes en circulation entraînées individuellement suivant des trajets rectilignes, parallèles et/ou perpendiculaires entre eux, qui comporte une multiplicité d'unités ou modules (101, 102, 104, 105) de même longueur alignés côte à côte longitudinalement, caractérisée en ce que chaque module comprend une voie principale de circulation rectiligne longitudinale (115, 117, 124, 125) ayant comme longueur la longueur commune aux modules, et éventuellement une ou des voies dérivées parallèles (108) et/ou perpendiculaires (111, 112) où s'effectuent l'assemblage et/ou l'usinage, en ce que les modules sont disposés suivant deux rangées parallèles de part et d'autre d'un plan longitudinal (90), et forment un ou plusieurs couples de modules, les modules d'un couple (105, 101 et 104, 102) étant disposés en regard l'un de l'autre de part et d'autre dudit plan longitudinal (90) et tous les modules étant interchangeables entre eux et en ce que les deux voies parallèles principales de circulation en sens opposés correspondant respectivement aux deux rangées sont reliées entre elles à chaque extrémité par un module de raccordement (106, 103) à voie transversale.

2. Installation selon la revendication 1, caractérisée en ce qu'elle comprend une ossature longitudinale interposée entre les modules d'une rangée et les modules de l'autre rangée.

3. Installation selon la revendication 2, caractérisée en ce que chacun des modules est monté de manière amovible sur ladite ossature.

4. Installation selon la revendication 2, caractérisée en ce que ladite ossature est constituée par une multiplicité d'éléments d'ossature de même longueur que les modules et montés les uns à la suite des autres de manière amovible.

5. Installation selon la revendication 3, caractérisée en ce que les jonctions entre les éléments d'ossature sont dans les mêmes plans transversaux que les jonctions entre les modules d'une rangée et les modules de l'autre rangée.

6. Installation selon la revendication 5, caractérisée en ce que les éléments d'ossature comportent, dans lesdits plans transversaux, des organes de montage amovibles des modules de l'une et l'autre rangée.

7. Installation selon la revendication 5, caractérisée en ce que les éléments d'ossature sont portés par des pieds (21, 22, 23) qui contribuent au montage de trois ou quatre modules adjacents.

8. Installation selon la revendication 6, caractérisée en ce qu'à l'une de ses extrémités un élément d'ossature comprend des traverses (61) pour le montage de module (ou de parties de modules).

9. Installation selon la revendication 8, caractérisée en ce qu'une même traverse (61) sert au montage de deux modules adjacents (101, 102).

10. Installation selon l'une ou plusieurs des revendications précédentes, caractérisée en ce que les modules sont interchangeables dans une même rangée et/ou d'une rangée dans l'autre, chaque module pouvant être dégagé ou engagé transversalement de, respectivement dans sa rangée, indépendamment l'un de l'autre, à la manière d'un tiroir.

11. Installation selon la revendication 1, caractérisée en ce qu'elle comprend un module (104 ou 105) à une seule voie longitudinale de circulation des palettes (module de circulation pure).

12. Installation selon l'une des revendications précédentes, caractérisée en ce que deux voies parallèles principales de circulation en sens opposés correspondant respectivement aux deux rangées sont reliées entre elles à chaque extrémité par une voie en forme de U que présente un module unique (106 ou 103).

13. Installation selon la revendication 1, caractérisée en ce qu'elle comprend un module (102) à une voie longitudinale de circulation des palettes associée à une voie dérivée perpendiculaire.

14. Installation selon la revendication 13, caractérisée en ce que la voie transversale dérivée est une voie pour l'acheminement à un poste automatique (118).

15. Installation selon la revendication 13, caractérisée en ce que le module comprend une seule voie transversale aboutissant à un guichet de poste automatique (501).

16. Installation selon la revendication 15, caractérisée en ce que le poste à guichet comporte deux guides (513, 514) qui coopèrent avec quatre colonnes (488, 489, 491, 492) servant de support de fixation à deux plaques d'appui.

17. Installation selon la revendication 1, caractérisée en ce qu'elle comprend un module (101) comprenant une voie longitudinale principale (115) de circulation des palettes, une voie longitudinale dérivée (108) parallèle à la voie longitudinale principale, et deux voies transversales (111, 112) qui relient la voie longitudinale dérivée à la voie longitudinale principale.

18. Installation selon la revendication 1, caractérisée en ce que chaque module constitue une unité autonome disposant de ses propres moyens moteur d'entraînement des palettes.

19. Installation selon la revendication 1, caractérisée en ce qu'une palette est entraînée par son bord le plus proche du plan longitudinal dans une voie longitudinale de transfert d'un module amont au module aval et par son bord le plus éloigné du plan longitudinal dans une voie longitudinale dérivée.

20. Installation selon la revendication 19, caractérisée en ce que la palette est entraînée par un bord transversal au plan longitudinal dans les voies perpendiculaires au plan longitudinal.

21. Installation selon l'une des revendications précédentes, caractérisée en ce que les palettes sont entraînées par un brin circulant épousant le trajet des voies et s'enroulant sur des poulies à axe vertical disposées à l'extrémité des voies et aux points de changement de direction.

22. Installation selon la revendication 1, caractérisée en ce que les modules sont à configuration générale rectangulaire et sont construits à partir d'une tôle percée et pliée formant le bâti (141) du module et le support des moyens de guidage (153) et d'entraînement (283) des palettes, des moyens pour la reconnaissance (437) des palettes et des moyens pour leur codage (235, 238).

23. Installation selon la revendication 22, caractérisée en ce que chacun des modules porte ses propres asservissements électro-pneumatiques et/ou hydrauliques intégrés.

24. Installation selon la revendication 22 ou 23, caractérisée en ce qu'une tôle écran (533, 536) fixée à la partie postérieure des modules des deux rangées ménage un couloir central (535) de dégagement et de protection des faisceaux de câbles électriques et pneumatiques et/ou hydrauliques et autres asservissements annexes.

25. Installation selon la revendication 24, caractérisée en ce que des couvercles clipsés (539, 541) ferment la partie supérieure du couloir central de dégagement de la structure longitudinale.

## Claims

1. A transformable plant designed to adopt a multiplicity of modes of manufacture by the assembly and/or machining of parts carried by circulating pallets which are conveyed individually along pathways, which are rectilinear, parallel and/or perpendicular to one another, and which comprise a multiplicity of units or modules (101, 102, 104, 105) having the same length and aligned side by side longitudinally, characterised in that each module comprises a main longitudinal rectilinear circulation path (115, 117, 124, 125) having the same length as the modules, and possibly one or more secondary parallel (108) and/or perpendicular (111, 112) paths where the assembly and/or machining take place, and the modules are arranged in two parallel rows on either side of a longitudinal plane (90), and form one or more pairs of modules. the modules of one pair (105, 101 and 104, 102) being arranged opposite one another on either side of the said longitudinal plane (90), and all the modules being interchangeable, and the two main parallel circulation paths running in opposite directions, which correspond respectively to the two rows, are connected to one another at each end by means of a connection module (106, 103) having a transverse path.

2. A plant according to claim 1, characterised in that it comprises a longitudinal framework interposed between the modules of one row and the modules of the other row.

3. A plant according to claim 2, characterised in that each module is mounted in a detachable manner on the said framework.

4. A plant according to claim 2, characterised in that the said framework comprises a plurality of framework elements, which are the same length as the modules and which are mounted one after another in a detachable manner.

5. A plant according to claim 3, characterised in that the junctions between the framework elements are in the same transverse planes as the junctions between the modules of one row and the modules of the other row.

6. A plant according to claim 5, characterised in that the framework elements comprise, in the said transverse planes, detachable mounting members for the modules of both rows.

7. A plant according to claim 5, characterised in that the framework elements are supported by feet (21, 22, 23), which are used to mount three or four adjacent modules.

8. A plant according to claim 6 caracterised in that, at one of its ends, a framework element comprises crosspieces (61) for mounting the modules (or module parts).

9. A plant according to claim 8, characterised in that a single crosspiece (61) is used for mounting two adjacent modules (101, 102).

10. A plant according to one or more of the preceding claims characterised in that the modules are interchangeable in a same row and/or from one row to another, whereby each module can be transversally disengaged from, respectively engaged into, its row, independently from each other, in the manner of a drawer.

11. A plant according to claim 1, characterised in that it comprises a module (104 or 105) having a single longitudinal circulation path for the pallets (basic circulation module).

12. A plant according to any one of the preceding claims, characterised in that two main parallel circulation paths running in opposite directions corresponding respectively to the two rows, are connected to one another at each end by means of a U-shaped path forming a single module (106 or 103).

13. A plant according to claim 1, characterised in that it comprises a module (102) having a longitudinal circulation path for the pallets connected to a secondary perpendicular path.

14. A plant according to claim 13, characterised in that the secondary transverse path is a path for connection to an automatic station (118).

15. A plant according to claim 13, characterised in that the module comprises a single transverse path ending at a window of an automatic station (501).

16. A plant according to claim 15, characterised in that the window station comprises two guides (513, 514) which cooperate with four uprights (488, 489, 491, 492), which are used as a support for securing two base plates.

17. A plant according to claim 1, characterised in that it comprises a module (101) comprising a main longitudinal circulation path (115) for the pallets, a secondary longitudinal path (108) which is parallel to the said main longitudinal path, and two transverse paths (111, 112), which connect the secondary longitudinal path to the main longitudinal path.

18. A plant according to claim 1, characterised in that each module constitutes an autonomous unit having its own drive means for the pallets.

19. A plant according to claim 1, characterised in that a pallet is conveyed by its edge nearest the longitudinal plane. along a longitudinal transfer path from an upstream module to the downstream module, and by its edge furthest from the longitudinal plane along a secondary longitudinal path.

20. A plant according to claim 19, characterised in that the pallet is conveyed by an edge which is transverse to the longitudinal plane along paths which are perpendicular to the longitudinal plane.

21. A plant according to any one of the preceding claims, characterised in that the pallets are guided by a circulating belt which follows the course of the paths, and which is wound onto pulleys having a vertical axis arranged at the end of the paths and at the points of change in direction.

22. A plant according to claim 1, characterised in that the modules usually have a rectangular shape and are formed from preforated sheet metal, which is folded to form the structure (14) of the module and the support for the guide (153) and drive means (283) for the pallets, the means (437) for the detection of the pallets and the means (235, 238) for the coding thereof.

23. A plant according to claim 22, characterised in that each module comprises its own integrated electro-pneumatic-and/or hydraulic automatic controls.

24. A plant according to claim 22 or 23, characterised in that a sheet metal screen (533, 536) secured to the rear end of the modules of both rows forms a central corridor (535) for the isolation and protection of the bunches of electric and pneumatic and/or hydraulic cables and other attached automatic controls.

25. A plant according to claim 24, characterised in that clip covers (539, 541) close the upper part of the central isolation corridor of the longitudinal structure.

**Patentansprüche**

1. Veränderbare Anlage zur Durchführung einer Vielzahl von Arbeitsgängen der Montage und/oder Bearbeitung von sich auf umlaufenden Paletten befindenden Teilen, wobei die Paletten einzeln entlang gerader, parallel und/oder rechtwinklig zueinander verlaufender Bahnabschnitten fortbewegt werden, bestehend aus einer Vielzahl von in Längsrichtung nebeneinander aufgereihten Einheiten oder Modulen (101, 102, 104, 105) gleicher Länge, dadurch gekennzeichnet, daß jeder Modul mit einem geraden in Längsrichtung verlaufenden Hauptumlaufbahnabschnitt (115, 117, 124, 125) versehen ist, dessen Länge der den Modulen gemeinsamen Länge entspricht, und gegebenenfalls mit einer oder mehreren parallelen und/oder rechtwinklig dazu verlaufenden (111, 112) Nebenbahnabschnitt(en) versehen ist, in welchen die Montage und/oder Bearbeitung durchgeführt wird, wobei die Module entlang zweier beiderseits einer Längsebene (90) parallel verlaufender Reihen angeordnet sind und somit ein oder mehrere Modul-paare bilden, und wobei die Module eines paares (105, 101 und 104, 102) sich beiderseits der genannten Längsebene (90) gegenüberliegen, und alle Module untereinander austauschbar sind, und wobei die Enden der beiden parallelen Haupt-Umlaufbahnabschnitte mit den einander entgegengesetzten Transportrichtungen jeweils der beiden Reihen mittels eines einen querverlaufenden Bahnabschnitt aufweisenden Anschlußmoduls (106, 103) miteinander verbunden sind.

2. Anlage nach Anspruch 1, gekennzeichnet durch ein sich in Längsrichtung erstreckendes Gestell, das zwischen den Modulen der einen Reihe und den Modulen der anderen Reihe angeordnet ist.

3. Anlage nach Anspruch 2, dadurch gekennzeichnet, daß jeder der Module auf dem Gestell im Baukastensystem montiert ist.

4. Anlage nach Anspruch 2, dadurch gekennzeichnet, daß das genannte Gestell aus einer Vielzahl von abnehmbaren, hintereinander angeordneten Gestellelementen besteht, welche die gleiche Länge wie die Module aufweisen.

5. Anlage nach Anspruch 3, dadurch gekennzeichnet, daß die Verbindungsstellen zwischen den Gestellelementen in den gleichen Querebenen liegen wie die Verbindungsstellen zwischen den Modulen der einen Reihe und den Modulen der anderen Reihe.

6. Anlage nach Anspruch 5, dadurch gekennzeichnet, daß die Gestellelemente in den genannten Querebenen abnehmbare Einrichtungen zur Montage der Module der einen und anderen Reihe aufweisen.

7. Anlagen nach Anspruch 5, dadurch gekennzeichnet, daß die Gestellelemente von Beinen (21, 22, 23) getragen sind, die in der Lage sind, drei oder vier Module nebeneinander aufzunehmen.

8. Anlage nach Anspruch 6, dadurch gekennzeichnet, daß ein Gestellelement an einem seiner Ende Querträger (61) für die Montage des Moduls (oder von Teilen des Moduls) aufweist.

9. Anlage nach Anspruch 8, dadurch gekennzeichnet, dass der gleiche Querträger (61) zur Montage zweier Module (101, 102) nebeneinander dient.

10. Anlage nach einem der vorhergehenden Ansprüche, dadurch gekennzeichnet, dass die Module in derselben Reihe und/oder von einer Reihe zueinander auswechselbar sind, wobei jeder Modul nach Art eines Einschubs quer aus seiner Reihe gelöst bzw. in seine Reihe eingeführt werden kann.

11. Anlage nach Anspruch 1, dadurch gekennzeichnet, daß sie ein Modul (104 oder 105) mit einem einzigen Längsbahnabschnitt für den Umlauf der Paletten (ausschließliches Umlauf-Modul) aufweist.

12. Anlage nach einem der vorhergehenden Ansprüche, dadurch gekennzeichnet, daß zwei zueinander parallele Haupt-Umlaufbahnen, die den beiden Reihen entsprechend entgegengesetzte Laufrichtungen aufweisen, die jeweils an ihren beiden Enden durch einen U-förmigen Bahnabschnitt miteinander verbunden sind, welche jeweils einen Modul (106 oder 103) bilden.

13. Anlage nach Anspruch 1, dadurch gekennzeichnet, daß sie ein Modul (102) aufweist, dessen in Längsrichtung verlaufender Bahnabschnitt für den Umlauf der Paletten bestimmt ist, welchem ein rechtwinklig dazu verlaufender Nebenbahnabschnitt zugeordnet ist.

14. Anlage nach Anspruch 13, dadurch gekennzeichnet, daß der querverlaufende Nebenbahnabschnitt eine Zubringerbahn zu einem automatischen Arbeitsplatz (118) bildet.

15. Anlage nach Anspruch 13, dadurch gekennzeichnet, daß der Modul einen einzigen Querbahnabschnitt aufweist, der zu einem Aufnahmerahmen einer automatischen Arbeitsstation (501) führt.

16. Anlage nach Anspruch 15, dadurch gekennzeichnet, daß die mit dem Aufnahmerahmen versehene Arbeitsstation zwei Führungen (513, 514) aufweist, die mit vier zur Befestigung von zwei Halteplatten dienenden Säulen (488, 489, 491, 492) zusammenwirken.

17. Anlage nach Anspruch 1, dadurch gekennzeichnet, daß sie mit einem Modul (101) versehen ist, der einen in Längsrichtung verlaufenden Haupt-Umlaufbahnabschnitt (115) für den Umlauf der Paletten, einen sich in Längsrichtung erstreckenden und parallel zum Haupt-Umlaufbahnabschnitt verlaufenden Nebenbahnabschnitt (108), sowie zwei Querbahnabschnitte (111, 112), welche die Neben-Längs-Bahnabschnitte mit dem Haupt-Umlaufbahnabschnitt verbinden, aufweist.

18. Anlage nach Anspruch 1, dadurch gekennzeichnet, daß jeder Modul eine autonome Einheit darstellt, welche ihre eigenen Antriebsmittel zur Fortbewegung der Paletten aufweist.

19. Anlage nach Anspruch 1, dadurch gekennzeichnet, daß eine Palette beim Transport in dem in Längsrichtung verlaufenden Bahnabschnitt von einem Modul zum anderen Modul an ihrem der Längsebene am nächsten liegenden Rand angetrieben wird, und während sie im längsverlaufenden Nebenbahnabschnitt an ihrem am weitesten von einer Längsebene entfernten Rand angetrieben wird.

20. Anlage nach Anspruch 19, dadurch gekennzeichnet, daß die Palette in den zur Längsebene rechtwinklig verlaufenden Bahnabschnitten an einem zur Längsebene querverlaufenden Rand angetrieben wird.

21. Anlage entsprechend einem der vorhergehenden Ansprüche, dadurch gekennzeichnet, daß die Paletten von einem Umlauftrum angetrieben werden, welches dem Verlauf der Bahnabschnitte entlang verläuft und über Riemenscheiben mit senkrechten Achsen geführt ist, die am Ende der Bahnabschnitte und an den punkten des Richtungswechsels angeordnet sind.

22. Anlage nach Anspruch 1, dadurch gekennzeichnet, daß die Module eine im allgemeinen rechtwinklige Form aufweist und aus gebogenen und gelochten Blechen bestehen, welche jeweils das Gehäuse (141) des Moduls bilden, das die Führungs- (153) und Fortbewegungs- (283) Einrichtungen der Paletten, die Einrichtungen für die Erkennung (437) der Paletten und die Einrichtungen für deren Codierung (235, 238) trägt.

23. Anlage nach Anspruch 22, dadurch gekennzeichnet, daß jeder Modul mit einem eigenen elektro-pneumatischen und/oder hydraulischen Versorgungssystem versehen ist.

24. Anlage nach Anspruch 22 oder 23, dadurch gekennzeichnet, daß durch Schutzwände (533, 536), die jeweils am hinteren Teil der Module beider Reihen angebracht sind, ein zentraler Kabelschacht (535) für das Hindurchführen und den Schutz der elektrischen und pneumatischen und/oder hydraulischen Leitungen bzw. Kabelbündel und anderer zusätzlicher Steuerungssysteme gebildet ist.

25. Anlage nach Anspruch 24, dadurch gekennzeichnet, daß Deckel (539, 541) mit Schnappverbindungen den oberen Teil des zentralen, in Längsrichtung geteilten Kabelschachtes verschließen.

FIG. 2

FIG. 1

0 115 357

FIG. 3

FIG. 5

FIG.6

FIG.8

FIG.9

FIG. 7

FIG. 14

FIG. 15

FIG. 4

3/7

0 115 357

FIG. 10

FIG. 11

FIG. 12

FIG. 13